# EUROPEAN PATENT APPLICATION

(11) **EP 1 045 609 A1**
(43) Date of publication of application: **18.10.2000**
(21) Application number: 99660063.1
(22) Date of filing: 16.04.1999
(51) Int. Cl.: H04Q 7/38

(54) **Location dependent sevices in mobile communications system**

(71) Applicant: Nokia Networks Oy, 02150 Espoo (FI); Omnitel Pronto Italia S.p.A., 10015 Ivrea (IT)
(72) Inventor: Vehmer, Seppo, 01640 Vantaa (FI); Vaara, Tomi, 02610 Espoo (FI); Putkiranta, Petteri, 02610 Espoo (FI); Salmela, Seija, 02130 Masala (FI); Mr.Bäck Juha,, 00570 Helsinki, (FI); Mr.Hulkkonen Tony,, 00510 Helsinki, (FI); Mr.Tuohino Markku, 02130 Espoo, (FI); Mr.Huotari Seppo, 02600 Espoo, (FI); Mr.Marchionna Emilio,, 20131 Milano, (IT); Mr.Zingarelli Valerio,, 10100 Torino, (IT)
(74) Representative: Äkräs, Tapio Juhani

(57) **Abstract**

In mobile communications systems cells are overlapping. This causes problems when location based services are provided to subscribers. In order to overcome the problems, a cell list including the serving cell identity and the neighbouring cell information of a mobile station is formed (3-5) and the cell list is then compared (3-12) with a predefined service area. On the basis of this comparison it is decided (3-12) whether or not the mobile station is in the service area.

## Description

### Background of the invention

The present invention relates to providing location dependent services in mobile communications systems and especially services providing tariff applications based on the subscriber's location.

Mobile communications system refers generally to any telecommunications system which enables a wireless communication when users are moving within the service area of the system. A typical mobile communications system is a Public Land Mobile Network (PLMN). One example of existing and developing mobile communications system is the pan-European mobile communications system GSM (Global System for Mobile Communications).

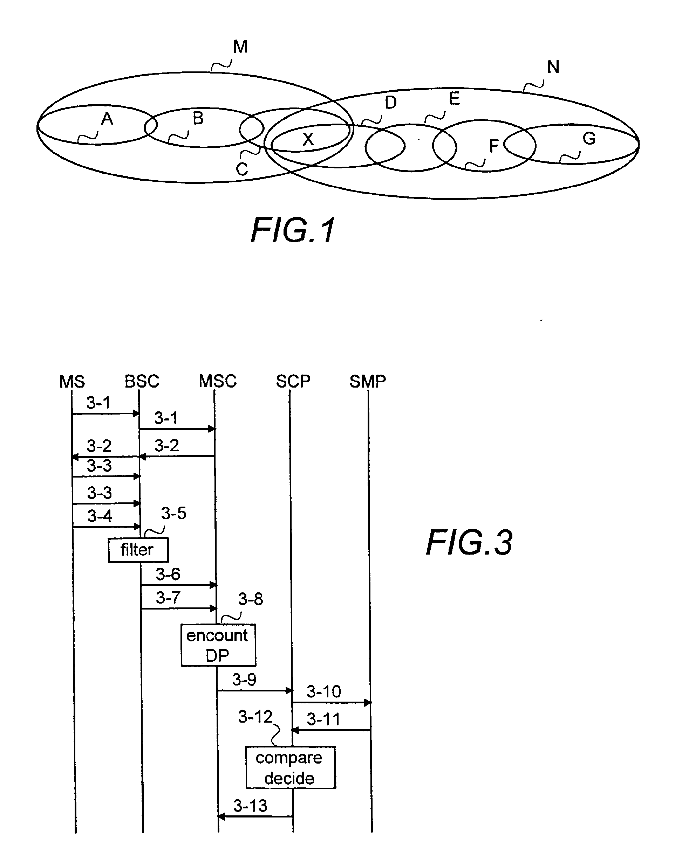

In cellular mobile communications systems, a radio coverage area is implemented with overlapping cells and different cell sizes. Nowadays even multiple cell layers are used. In a multilayer radio coverage areas a large coverage area is implemented with a macro cell, which often completely covers a geographical area of one or more micro cells which are cells with very small coverage areas. A micro cell is used for instance in areas which are difficult to cover or which require a great deal of subscriber capacity. Figure 1 of the accompanying drawings shows a simplified example of a two layer radio coverage in a mobile communications system. In figure 1, a large macro cell M covers the areas of smaller micro cells A, B and C and a large macro cell N covers the areas of micro cells D, E, F and G.

It is characteristic of cellular mobile communication systems that mobile stations may roam freely and switch from one cell to another within the area of a mobile communication system. When the mobile station is turned on, it camps on a cell which is the most suitable one. Normally when camped on the cell, the mobile station monitors its neighbouring cells for a possible change of camped cell in case one of the neighbouring cells provides better service. For example, the cell areas C, D, M and N in figure 1 illustrate the areas in which the base station of each mentioned cell can offer a sufficient signal level to a mobile station located in position X.

The problem arises, if the subscriber of mobile station locating in position X has subscribed a location dependent service, like home zone service. Home zone service is one example of so called fixed line substitution services in mobile communications systems. With home zone service an operator offers lower charging rates to calls established from a cell belonging to the defined home zone area of a subscriber. If the home zone area of a subscriber using mobile station MS in location X in the example illustrated in figure 1 is defined to be cell C, the subscriber does not get the home zone service, if the mobile station camps on cell D, M or N. There is no way the subscriber can command the mobile station to camp on cell C. The only known way to make sure that the subscriber gets the home zone service when located in place X, is to define the home zone area to be cells B (also overlapping with cell C), C, D, M and N. In the operator's point of view the home zone area is then far too big.

### Brief description of the invention

An object of this invention is to overcome the above-described problems in a mobile communications system caused by overlapping cells when location based services are provided to subscribers. The object is achieved by means of method, a mobile communications system and network elements which are characterized by what is disclosed in the characterising part of the appended independent claims. Preferred embodiments of the invention are specified in the dependent claims.

The invention is based on using information about the current serving cell and neighbouring cells of the mobile station when determining the actual geographical location of a subscriber. On the basis of this actual location is decided whether the subscriber is located so that he/she can use a location dependent service.

With this more reliable determination of the location a high service quality with relatively small service area is achieved. A mobile subscriber can be sure, that he/she gets location dependent services when he/she is in the defined area for that service, even if his/her mobile station is camped on the overlapping cell not belonging to the defined service area and an operator can define the service area of a subscriber to be very small and not including any overlapping cells. Thus the operator can keep the customer satisfaction high and still not eat too much normal mobile revenue.

### Brief description of the drawings

The invention will be described in greater detail by means of preferred embodiments with reference to the accompanying drawings, in which:
Figure 1 illustrates overlapping radio coverage in a mobile communicating system;
Figure 2 is a block diagram of the structure of a mobile communications system in the first preferred embodiment of the invention;
Figure 3 represents a signalling chart in the first preferred embodiment of the invention; and
Figure 4 represents a signalling chart in the second preferred embodiment of the invention.

### Detailed description of the invention

The invention can be applied to many kinds of cellular mobile communications system like the GSM system or corresponding mobile communications systems, such as DCS 1800 (Digital Cellular System for 1800 MHz) and PCS (Personal Communication System). The invention is suitable also for third generation mobile systems, such as Universal Mobile Communication System (UMTS) and Future Public Land Mobile Telecommunication System (FPLMTS) later renamed as IMT-2000 (International Mobile Telecommunication 2000), which presently are being developed. In the following the invention will be described in greater detail by way of example mainly with reference to the GSM system, yet without limiting the invention to that kind of particular mobile system. For the sake of clarity the GPRS (General Packet Radio Service) and CAMEL (Customised Applications for Mobile network Enhanced Logic) are not included in the basic GSM system. They are services of GSM 2+-phase.

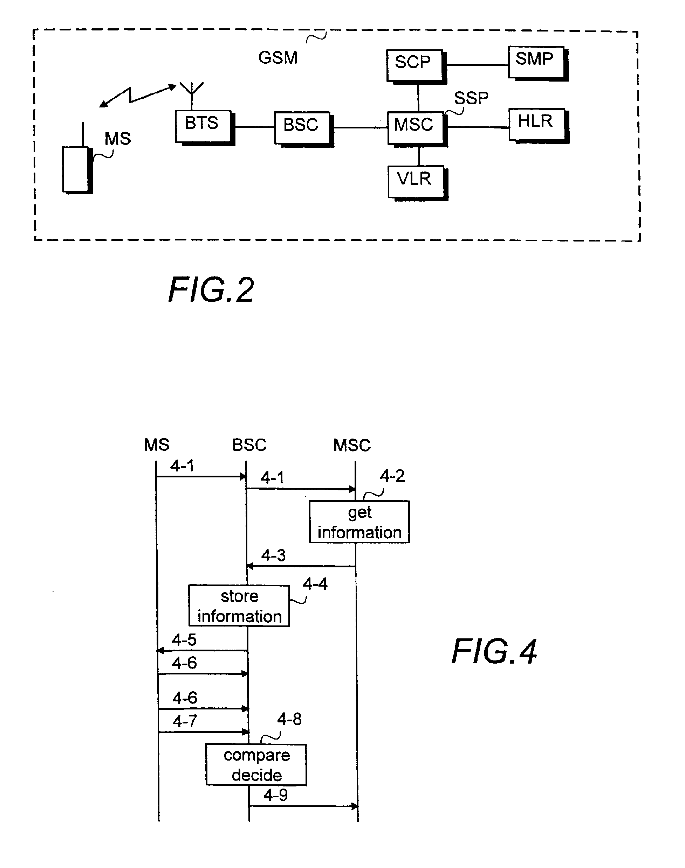

The basic configuration of the GSM system appears from figure 2. For a more detailed description of the GSM system, reference is made to *The GSM System for Mobile Communications* by M. Mouly and M. Pautet, Palaiseau, France, 1992, ISBN:2-9507190-0-7.

The GSM network configuration comprises two parts: a Base Station Subsystem BSS and a Network Subsystem NSS. The BSS and mobile stations MS communicate via radio connections. In a base station subsystem BSS each cell is served by a Base Transceiver Station BTS. A group of base transceiver stations BTS is connected to a Base Station Controller BSC, whose function is to manage the radio frequencies and channels used by the base transceiver station BTS. The base station controllers BSC are connected to a Mobile Switching Centre MSC. The function of a mobile switching centre MSC is to switch calls involving at least one mobile station MS. Some mobile switching centres MSC are connected to other telecommunication networks, such as the Public Switched Telephone Network PSTN, and they comprise transmission functions for switching calls to and from these networks. Such mobile switching centres are called gateway MSCs (not shown in the figure).

Two types of databases are associated with call routing. Subscriber information on all subscribers of the network are stored permanently or semi-permanently in a Home Location Register HLR, the information comprising information on the services that the subscriber has access, e.g. subscribed location dependent services. The other type of register is a Visitor Location Register VLR. A visitor location register VLR is usually associated with a single mobile switching centre MSC, but it may also serve several exchanges. A visitor location register VLR can be integrated into a mobile switching centre MSC. Such an integrated network element is called a visited mobile switching centre MSC/VLR. When a mobile station MS is active (it has registered in the network, and can make or receive calls), most of the subscriber information on the mobile station MS contained in the home location register HLR are loaded (copied) into the visitor location register VLR of the mobile switching centre MSC in the area of which the mobile station MS is.

In the GSM system serving as an example, a mobile station user is identified by a subscriber-specific identity module, or SIM card, which contains e.g. a subscriber identity IMSI. In the present application the word mobile station refers to a combination of a actual mobile equipment and a SIM card detachably coupled to the mobile equipment, unless it is otherwise stated.

The first preferred embodiment illustrated in figure 2 makes use of Intelligent Network technology. An intelligent network (IN) is able to provide a subscriber of a telecommunications network, such as a wired network or a mobile telephone network, with a plurality of various services. The invention and its background will be described by the terminology of recommendation ETS 300 374-1 CorelNAP, but the invention can also be employed in intelligent networks implemented according to other intelligent network standards.

Figure 2 shows some elements of an intelligent network which are relevant to the understanding of the invention, such as a Service Switching Point SSP. It is a network element performing service switching function (SSF). The SSP may be a mobile service switching centre MSC, which in, cludes SSF as is the case in figure 2. The SSF is an interface between a conventional call control function CCF and the service control function SCF of intelligent network. The network element performing the SCF is called a service control point SCP. An intelligent network service is produced by the service switching point SSP inquiring instructions from the service control point SCP by means of messages to be transmitted across the SSP/SCP interface upon the encounter of detection points associated with the services. In association with an intelligent network service, a service program is started at the service control point SCP, the operation of the program determining the messages transmitted by the SCP to the SSP at each stage of a call.

A service data function SDF is a database employed by the SCF. The service logic programs may query and update SDF information. For instance, subscriber specific or service number specific information can be stored in the SDF. The SDF can be either a database management system at the service control point SCP or, as illustrated in figure 2, a separate database point SDP (Service Data Point).

In this example illustrated in figure 2, the service area definitions are in a database located in a service management point SMP. Alternatively the information may be located in different databases and/or in some other network element. The subscriber specific service area definitions according to the invention comprises at least a cell identity or cell identities belonging to the defined service area. One subscriber may have several different service area definitions. A charging parameter may be included in each service area definition. Subscriber specific information may also comprise a parameter value for the comparison algorithm, the parameter value defining how many measured cells are taken in account for that subscriber. The parameter value may be common to each defined service area or it may be defined for each area. The term "cell identity" refers in the present application to any identity data with which a network cell can be identified and the geographical scope of the service area can thus be determined. A cell identity should therefore be considered to generally refer in the present application to any identity data defining a network cell. The subscriber specific service area definitions may comprise also other parameters.

A specialised resource function SRF (not shown in figure 2) of the intelligent network is an interface for such network mechanisms that relates to interaction with the subscriber,e.g. giving announcement to subscribers. The SRF can be associated with intelligent peripherals IPs (not shown in figure 2) which comprise more developed speech processing functions than the switching centres or it can be located at the service switching point SSP.

The present invention can be implemented to the existing network elements. They all have processors and memory with which the inventive functionality described below may be implemented and/or application specific circuits may be installed in them. The functions described below may be located in one network element or some of them may be in one element and the others in other elements regardless how they are located in the examples used to illustrate the invention.

Figure 3 illustrates a signalling chart in the first preferred embodiment of the invention. In this example illustrated in figure 3 the location dependent service is home zone service. In home zone service the geographical location is decided in the beginning of the call set up, because the charging parameter is decided during call set up. For the sake of clarity the MSC is also a SSP. It is also assumed that the MS has subscribed the home zone service.

Referring to figure 3 the mobile station sends a message 3-1 to the base station controller BSC. The message is a request for originating call establishment. The BSC adds to the message 3-1 information about the cell from where the request is made and then forwards the message 3-1 to the mobile switching centre MSC, which acknowledges the message to the MS via the BSC in an acknowledgement message 3-2. Then the common Mobility Management procedures, authentication and ciphering between the MS and the network are taking place. These procedures are not shown in figure 3.

During those procedures the MS sends messages 3-3 to the BSC. Messages 3-3 describe the radio environment of the MS. They are measurement reports done by the MS. The MS continuously measures the signals of the base stations situated close to the cell where it is located, for example, for a possible cell change. On the basis of the neighbouring cell information transmitted by each base station on a broadcast control channel, the mobile station identifies the neighbouring cells it should monitor. Said transmitted neighbouring cell information may comprise data about cells other than those conventionally regarded as neighbouring cells. The term "neighbouring cell" does not necessarily refer in the present application to cells that are situated next to each other geographically, but to all foreign cells indicated by the base station on the broadcast frequency. In one embodiment of the invention the MS is adapted to measure also at least one signal associated with a cell from the home zone of the subscriber even if that cell is not indicated in the neighbouring cell information transmitted on the broadcast control channel of the serving cell. The signal characteristics, which in the example of GSM system is the broadcast channel frequency of the cell to be measured, are preferably stored in the SIM card of the subscriber. For example in the GSM mobile system, the MS may simultaneously measure the signal level and/or quality of at most 32 other base stations in addition to the serving base station. The results of these measurements are sent to the BSC in the messages 3-3. The mobile station measures the signal of the indicated base stations in a manner determined in the GSM recommendations.

When the common Mobility Management, authentication and ciphering procedures are done, the MS sends a set up message 3-4 to the BSC.

After the reception of the message 3-4, the BSC filters the received measurements in point 3-5. A filtering algorithm can be, that serving cell and all those cells, measured signal level of which, exceeds the given treshold, are sent to the MSC. Another filtering algorithm is that the serving cell and a predefined number of other cells in the order of the measured signal level are sent to the MSC. The filtering algorithm used in the first preferred embodiment is that the serving cell and a predefined number of other cells in the order of the measured signal level, if the signal level exceeds the given treshold, are sent to the MSC. It is also possible to have a new BSC level parameter to define the criteria to select the measured cells to be sent to the MSC. The BSC filtering algorithm used for selecting the neighbouring cells to be sent to the MSC may be set to each adjacent cell. During filtering also a cell list is formed. In embodiments where no filtering is done the measurement results form a cell list.

The BSC sends the filtered radio environment information in a message 3-6 to the MSC. A cell list refers in the present application to the filtered radio environment information and hereafter the word cell list is used. The parameters in the cell list in the message 3-6 are in the first preferred embodiment the cell identity of the serving cell and at most cell identities of six neighbouring cells. The message 3-6 may, for example, be a handover required message with a new cause value indicating that no handover is required. The message 3-6 may example be HoReq(serving cell, list of neighbouring cells, no handover required indication). After that the BSC sends a setup message 3-7 to the MSC.

When the MSC (which is also a SSP) receives the messages 3-6 and 3-7 it encounters a detection point DP of the intelligent network in point 3-8 and sends a message 3-9 to the SCP. The message 3-9 includes the cell list included in message 3-6, in other words the cell identities of the serving cell and at most six neighbouring cells. The encountered detection point is in the first preferred embodiment either DP1 (Orig. Attempt_Authorized) or DP2 (Collected_Info) depending on the service portfolio of the subscriber.

After receiving the cell list in the message 3-9 the SCP inquires from the SDP the home zone list of the MS in a message 3-10, and gets it in a message 3-11. The message 3-11 includes home zone list, which comprises cell identities defined to belong to the home zone of the MS. The message may also include a charging parameter, i.e. tariff, to be used, if the MS is in its home zone. The message may include also a parameter value X for the comparison algorithm.

When the SCP gets also the home zone list it compares in point 3-12 in the first preferred embodiment the received cell identities and the cell identities in the home zone list. The comparison is done e.g. between the cells of home zone list and the first X measured cell. According to the comparison algorithm used in the first preferred embodiment, if one of the received cell identities is found in the home zone list, it is decided that the MS is in the home zone area. Otherwise it is not in the home zone. After finding out whether the MS is in the home zone area, the SCP decides whether the home zone tariff can be used for this call. After the decision it sends the needed charging information to the MSC in a message 3-13 and the call set up procedure continues normally.

In the first preferred embodiment the filtering in point 3-5 and the sending the message 3-6 is done always after reception of the message 3-4 because the BSC has not any information about whether the subscriber has subscribed location dependent services. In some other embodiment of the invention the MSC can send e.g. in the message 3-2 information indicating that the subscriber has subscribed location dependent services and only in a response to this indication the functionality described earlier will be triggered.

Yet in another embodiment of the invention the MSC does some preanalysis checking whether the MS is calling in the area where the home zone could be located and only if the MS is in such an area, the detection point is encountered in point 3-8 and the message 3-9 sent. For the preanalysis the MSC has, or has access to, subscriber specific home zone information about those home zones which or at least parts of which are located under the control area of the MSC.

Still in another embodiment of the invention the MSC does also all the functionality of the SCP described earlier.

In another embodiment of the invention the MSC does the filtering. In that embodiment the message 3-6 includes the measurement results received in the messages 3-3. It is also possible that no filtering is done and the SCP receives in the message 3-9 the measurement results as a cell list instead of filtered cell list. With filtering in the BSC the signalling load in network is minimized and only information needed in reliably deciding the location of a subscriber is sent in the network to the MSC and SCP.

The cell list in the messages 3-6 and 3-9 may include besides the identities of a serving cell and at most a predetermined number of neighbouring cells selected by a predetermined criteria, also some or all of the following information or any combination thereof:
- received quality information, e.g. signal strength of cells and/or bit error ratio
- timing advance of the serving cell.
- LSA ID or IDs (Localised Service Area Identity or Identities) of the serving cell and/or the other cells in the cell list (These identities refer to GSM 2+ service called SoLSA which is described in detail in ETSI specification GSM 03.73 version 2.0.0)
- received OTD (Observed Time Difference) of the serving cell and/or the other cells in the cell list, if the OTD is available
- received RTD (Received Time Difference) of the serving cell and/or the other cells in the cell list, if the RTD is available.

With received is meant that the mobile station has sent this information in the messages 3-3.

With this further information it is possible to customize the comparison algorithm used in point 3-12. For example, with the help of timing advance a use of a macro cell as a part of a home zone area is possible so that the home zone area stays rather small.

Figure 4 illustrates a signalling chart in the second preferred embodiment of the invention. Also in this example illustrated in figure 4 the location dependent service is home zone service. For the sake of clarity the MSC is also a SSP. It is also assumed that the MS has subscribed the home zone service.

Referring to figure 4 the mobile station sends a message 4-1 to the base station controller BSC. The message is a request for originating call establishment. The BSC adds to the message 4-1 information about the cell from where the request is made and then forwards the message 4-1 to the mobile switching centre MSC. The MSC gets the home zone information of the MS from the VLR or from it's own database and includes it in point 4-2 to an acknowledge message 4-3. The BSC receives the acknowledgement message 4-3 and stores the home zone information in point 4-4. Then the BSC sends an acknowledgement message 4-5 without any home zone information to the MS. Then the common Mobility Management procedures, authentication and ciphering between the MS and the network are taking place. These procedures are not shown in figure 4.

During those procedures the MS sends messages 4-6 to the BSC. The messages 4-6 are same as the messages 3-3 described earlier with figure 3.

When the common Mobility Management, authentication and ciphering procedures are done, the MS sends a set up message 4-7 to the BSC.

After the reception of the message 4-7, the BSC compares in point 4-8 the measured results with the home zone information in order to find out whether the MS is in the home zone or not. On the basis of this comparison the BSC decides whether the MS is camped on cell belonging to the home zone area, or does it command the MS to make a handover to a cell belonging to the home zone area or would it have been possible to command the MS to make said handover, but e.g. due to the quality of radio environment it is not done. Other possible reason for not to command the MS to do handover is that the defined home cells are full. If the answer to one of the alternatives is yes, the MS locates in the home zone area and the BSC adds an indication indicating "home zone tariff' to the set up message 4-9 it sends to the MSC. The call set up procedure continues normally.

In the second preferred embodiment the MSC always sends the home zone information to the BSC in a response of receiving the message 4-1. If the subscriber has not subscribed the service, the home zone information is empty.

In some other embodiment when receiving no home zone information the BSC does not do the storing and comparing described in points 4-4 and 4-8.

In another embodiment of the invention the MSC does the preanalyses described earlier with figure 3 and only sends the home zone information to the BSC if the MS is in a possible home zone area.

Yet in another embodiment of the invention the MSC encounts a detection point in the point 4-2 and inquiries the home zone information from an intelligent network, e.g. from an SCP.

Still in another embodiment of the invention the BSC has subscriber specific home zone information about those home zones which or at least parts of which are located under the control area of the BSC. Then the point 4-2 is done instead of point 4-4 in the BSC and the MSC does not include home zone information into the message 4-3.

The steps and messages have not been set out in absolute time sequence in figures 3 and 4. Some of the above described steps and messages may take place simultaneously or in different order, for example message 3-4 and step 3-5 in figure 3. The messages may include more information than what is stated above. The names of the signalling messages may differ form those set out above or the parameters/flags according to the invention may be sent in other signalling messages as stated above. Also other messages not shown in figures may be sent between messages stated above.

The described embodiments and/or part of their features may be combined in order to provide another embodiment of the invention.

The filtering, comparison and deciding described earlier are only examples and the invention is not restricted to use them. Operators may make their own filtering and comparison algorithms with different kind of criteria, thresholds and conditions.

Although the invention is described above with the mobile originating call set up signalling and home zone service, the invention is not limited to them. The invention may be used with the mobile terminating call set up signalling as well, if e.g. the charging of terminating calls is used. The invention may be used with other location dependent services, like HSCSD (High Speed Circuit Switch Data) data call in 3 time slots or local mobility service, where the call is connected only if the subscriber is in the defined service area. It is also possible to determine the location during some other phase of a call or a service than with the call set up signalling, e.g. with location update or during handovers. It is even possible to do filtering, and/or comparing and deciding in a mobile station. The location area may be determined in the mobile station by e.g. asking the home zone area information from the network or using information stored in SIM. After the decision the tariff to be used and/or the decision is signalled to the network. When the location is determined during call set up as described in the first and second preferred embodiments, no extra delay is required in the call set up, because of the natural delay caused by authentication and ciphering.

It will be obvious to one skilled in the art that the basic idea of the invention can be implemented in many different ways. The invention and its embodiments are thus not limited to the examples described above but may be modified within the scope of the appended claims. The accompanying drawings and the description pertaining to them are only intended to illustrate the present invention. Different variations and modifications to the invention will be apparent to those skilled in the art, without departing from the scope and spirit of the invention defined in the appended claims.

## Claims

1. A method for providing a location dependent service in a mobile communications system, **characterized** by the method comprising steps of:
forming a cell list including the serving cell identity and the neighbouring cell information of a mobile station;
comparing the cell list with a predefined service area; and
deciding whether or not the mobile station is in the service area on the basis of said comparison, and
providing the service if the mobile station is in the service area.

2. A method according to claim 1, **characterized** by the neighbouring cell information comprising cell identities.

3. A method according to claim 2, **characterized** by the method further comprising steps of:
deciding that the mobile station is in the service area if at least one cell identity of the cell list is also in the predefined service area.

4. A method according to claim 1 or 2, **characterized** by the cell list comprising also timing advance of the serving cell.

5. A method according to any of the preceding claims, **characterized** by doing the forming, comparing and deciding during a call set up.

6. A method according to any of the preceding claims, **characterized** by the method further comprising steps of:
receiving measurement results of neighbouring cells from the mobile station; and
forming the cell list by filtering the results with a predefined filtering algorithm.

7. A method according to claim 6, **characterized** in that the predefined filtering algorithm forms the cell list to consist of a predefined number of cells with highest measured radio signal quality.

8. A method according to claim 6, **characterized** in that the predefined filtering algorithm forms the cell list to consist of cells with a measured radio signal quality exceeding a given threshold.

9. A mobile communications system (GSM) comprising
at least two cells,
at least one mobile station (MS) arranged to measure at least radio signals transmitted by base stations (BTS) of the two cells and to report the measurement results to the mobile communications system,
**characterized** in, that
the system (GSM) is arranged to compare a serving cell identity and neighbouring cell information received from the mobile station in measurement result reports to a predefined service area and to decide whether or not the mobile station is in the service area on the basis of said comparison.

10. A mobile communications system (GSM) according to claim 9 further comprising a first network element and an intelligent network or a connection thereto, **characterized** in, that
the first network element (BSC) is arranged to filter with a predefined filtering algorithm the measurement results in order to form a cell list and to send the cell list to the system; and
the intelligent network (SCP) is arranged to do the comparing and deciding in a response to receiving a cell list.

11. A mobile communications system (GSM) according to claim 9 further comprising a first and a second network element, **characterized in**, that
the first network element (BSC) is arranged to filter with a predefined filtering algorithm the measurement results in order to form a cell list and to send the cell list to the system; and
the second network element (MSC, SCP) is arranged to do the comparing and deciding in a response to receiving a cell list.

12. A mobile communications system according to claim 10 or 11, **characterized** in, that the first network element (BSC) is arranged to do the filtering in a response of receiving a call set up message from the mobile station.

13. A mobile communications system according to claim 10 or 11, **characterized** in, that the first network element (BSC) is arranged to do the filtering in a response of receiving a call set up message to the mobile station.

14. A network element in a mobile communications systems having mobile stations arranged to measure radio signals transmitted by base stations of the cells of the system and to report the measurement results to the mobile communications system, **characterized** in, that the network element is arranged to compare a serving cell identity and neighbouring cell information received from a mobile station in measurement result reports to a predefined service area and to decide whether or not the mobile station is in the service area on the basis of said comparison.

15. A network element according to claim 14, **characterized** in, that it is a base station controller.

16. A network element in a mobile communications systems having mobile stations arranged to measure radio signals transmitted by base stations of the cells of the system and to report the measurement results to the mobile communications system, **characterized** in, that the network element is arranged to compare a serving cell identity and neighbouring cell information received from the mobile station in measurement results via another network element of the mobile communications system to a predefined service area and to decide whether or not the mobile station is in the service area on the basis of said comparison.

17. A network element according to claim 16, **characterized** in, that it is a mobile switching centre.

18. A network element according to claim 16, **characterized** in, that it is a service control point of an intelligent network.
